# EUROPÄISCHE PATENTSCHRIFT

(11) **EP 0 852 110 B1**
(45) Veröffentlichungstag und Bekanntmachung des Hinweises auf die Patenterteilung: **01.10.2003**
(21) Anmeldenummer: 97119846.0
(22) Anmeldetag: 13.11.1997
(51) Int. Cl.: A01G 9/02, A01G 27/02

(54) **Pflanzgefäss**
Plant container
Pot pour plantes

(30) Priorität: 07.01.1997 DE 29700069 U
(43) Veröffentlichungstag der Anmeldung: 08.07.1998
(73) Patentinhaber: Gebr. Pöppelmann, Kunststoffwerk-Werkzeugbau, 49393 Lohne (DE)
(72) Erfinder: Sieverding, Alfons, 49393 Lohne-Brockdorf (DE); Schmidt, Guido, 49413 Dinklage (DE); Orschulik, Günther, 49451 Holdorf (DE)
(74) Vertreter: Busse & Busse Patentanwälte

(56) Entgegenhaltungen:
- EP-A- 0 030 892
- DE-C- 4 118 654
- FR-A- 2 724 813
- GB-A- 2 103 464
- GB-A- 2 139 465
- GB-A- 2 200 523
- GB-A- 2 207 591

## Beschreibung

Die Erfindung bezieht sich auf ein Pflanzgefäß nach dem Oberbegriff des Anspruches 1.

Pflanzgefäße der eingangs genannten Art nach dem Stand der Technik weisen zur Befüllung des im Bodenbereich des Pflanzgefäßes angeordneten Speichers für Wasser einen Füllstutzen auf, der sich im wesentlichen von dem den Speicher oberseitig begrenzenden Trennboden bis in den Oberkantenbereich des Pflanzgefäßes erstreckt, so daß eine Befüllung des Speichers mit Wasser auch nach Bepflanzung des Gefäßes möglich ist.

Aus der EP-A-30892 ist weiterhin ein Pflanzgefäß in einer stapelbaren Form bekannt, bei dem ein wasserdurchlässiger Trennboden in herausnehmbarer Form mit einem Fortsatz verbunden ist, der in der Transportstellung flach unter dem Boden liegt. Zur Ingebrauchnahme wird der Boden an einem weiteren Fortsatz herausgezogen, der dabei als Griffahne dient, um danach abgerissen zu werden und nach dem Hochschwenken des ersten Fortsatzes zu dessen Fixierung dient. Der erste Fortsatz wird dabei zu einer Rinnenform abgewinkelt und, teilweise auch mit Hilfe des zweiten Fortsatzes, im Pflanzgefäß innenseitig fixiert. Die Handhabung ist schon auf der Fertigungsseite umständlich. Im Verkauf erscheint diese Ausführungsform wenig markttauglich, da der Interessent oder Käufer weder die Vollständigkeit der Ware noch die notwendige umständliche Handhabung übersehen kann.

Solche Füllstutzen erstrecken sich entweder als starre Teile vom Trennboden bis zur Oberkante des Pflanzgefäßes oder sind als steckbare Rohre ausgebildet. Dabei ergibt sich eine Behinderung der Stapelung noch nicht befüllter Pflanzgefäße in Transport oder Lagerung oder die umständliche Handhabung gesonderter, leicht verlierbarer Steckteile. Desgleichen sind lose, beim Transport unter dem Trennboden gelagerte Füllstützen schlecht zu kontrollieren und für einen Käufer nicht zu sehen. Die Erfindung löst dieses Problem mit den Merkmalen des Anspruches 1.

Durch die Verbindung des Füllstutzens mit dem Trennboden über ein Scharnier und die Möglichkeit, den Füllstutzen flach auf den Trennboden zu einer Stapelstellung niederzuschwenken, ist erreicht, daß in abgesenkter Stellung des Füllstutzens dieser flach auf dem Trennboden aufliegt und eine Stapelung mehrerer Pflanzgefäße nicht behindert. Gleichwohl ist er unverlierbar mit dem Trennboden verbunden, so daß es beim Verkauf sowie auch auf dem Weg dahin keine Fragen zur Vollständigkeit des Gefäßes und kein Kontrollerfordernis gibt. Der Bentutzer braucht auch keine Hinweise, um den Füllstutzen in seine Gebrauchsstellung zu bringen.

Hinsichtlich weiterer vorteilhafter Ausgestaltungen wird auf die Ansprüche 2 bis 11 verwiesen.

Besonders vorteilhaft ist der Füllstutzen in Form eines offenen Rinnenprofils ausgebildet, das in Gebrauchsstellung mit der Innenwand des Pflanzgefäßes abschließt und in abgesenkter Transportstellung als nach oben hin offene Halbrinne auf dem Trennboden aufliegt. Dazu weist der Trennboden vorteilhaft eine Vertiefung auf, die den Füllstutzen in dieser Transportstellung aufnimmt, so daß er oberseitig nicht oder nur sehr wenig über den Trennboden hinausragt.

Besonders vorteilhaft weist der Trennboden napfförmige Vertiefungen zur Aufnahme von Füßen und/oder Rollen aufzustapelnder Gefäße auf, so daß bei der Stapelung die das Pflanzgefäß unterseitig begrenzenden Rollen oder Füße in dem Trennboden des nächstunteren Pflanzgefäßes aufgenommen sind und somit eine dichte Stapelung der Pflanzgefäße ermöglicht ist.

Um den Wasserstand im Speicher kontrollieren zu können, weist eine vorteilhafte Ausgestaltung des Pflanzgefäßes in einer Außenwandung im Bereich des Speichers ein transparentes Sichtfenster auf, das vorzugsweise über ein randseitiges Verzahnungsprofil mit dem Pflanzgefäß zu einem einstückigem Spritzgußteil verbunden ist, so daß Undichtigkeiten im Bereich dieses Sichtfenstereinsatzes ausgeschlossen sind.

Insbesondere für den Außengebrauch eines solchen Pflanzgefäßes ist vorzugsweise im Sichtfenster ein herausdrückbarer Verschwächungsbereich ausgebildet, der nach Herausdrücken einen Überlauf darstellt, so daß in das Pflanzgefäß unkontrolliert eingebrachtes Regenwasser nicht zu einem Überfüllen des Pflanzgefäßes mit Wasser führt. Oberhalb der Überlauföffnung ist vorzugsweise eine Abweiserfläche ausgebildet, so daß beim Befüllen des Füllstutzens mit Wasser dieses nicht direkt aus der Überlauföffnung austreten kann, sondern zunächst an dieser vorbei geführt wird und erst nach erreichen des gewünschten Wasserstandes die Überlauföffnung wirksam wird.

Weitere Vorteile und Einzelheiten ergeben sich aus der Zeichnung und der nachfolgenden Beschreibung eines Ausführungsbeispiels des Gegenstandes der Erfindung. In der Zeichnung zeigen:
- Fig. 1: eine querschnittliche Ansicht eines erfindungsgemäßen Pflanzgefäßes in Gebrauchsstellung des Einfüllstutzens,
- Fig. 2: eine ähnliche Ansicht zu Fig. 1 in Transportstellung des Einfüllstutzens,
- Fig. 3: eine schematische, halbaufgebrochene Darstellung des Bewegungsablaufes des Einfüllstutzens von der Transport- in die Gebrauchsstellung,

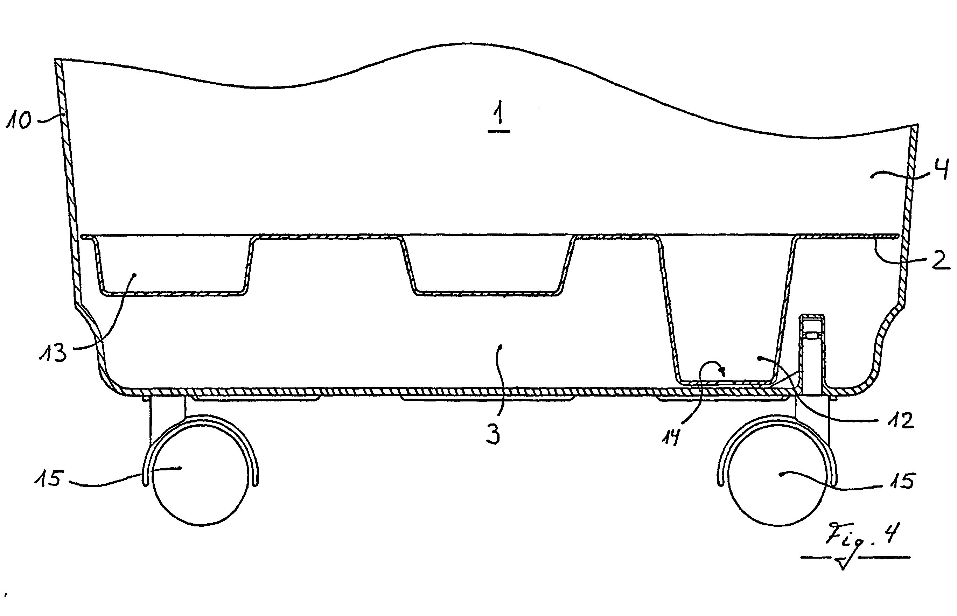

- Fig. 4: den unteren Bereich des Pflanzgefäßes in querschnittlicher Darstellung,

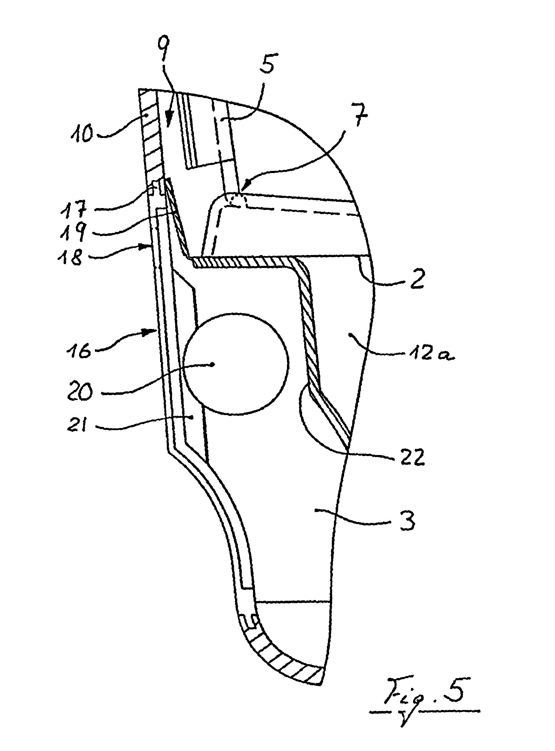

- Fig. 5: eine Ausschnittsvergrößerung des Sichtfensters und der Schwimmkugel in querschnittlicher Ansicht.

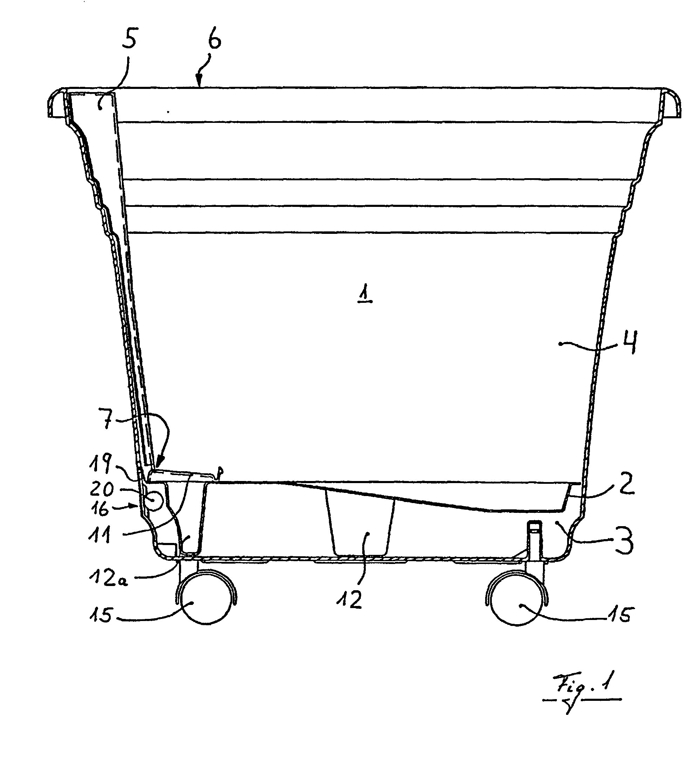

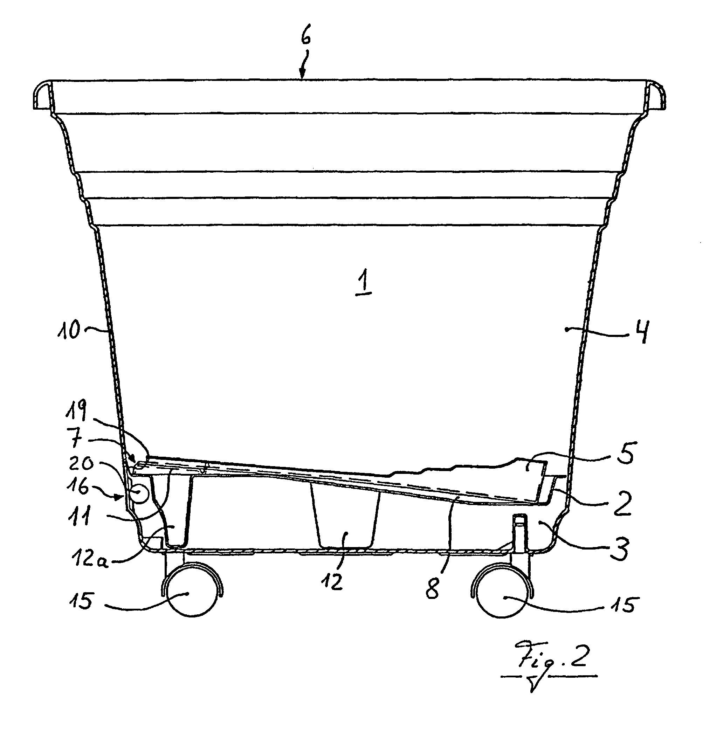

Im einzelnen weist das Pflanzgefäß 1, das oberseitig offen ist und nach oben hin sich für ein Ineinanderstapeln stetig erweitert, einen Trennboden 2 auf, der einen Speicher 3 im unteren Teil des Pflanzgefäßes von dem mit Pflanzgrund anzufüllenden Bereich 4 oberhalb des Trennbodens 2 abgrenzt. Der Speicher 3 ist über einen Füllstutzen 5 mit Wasser befüllbar, wobei der Füllstutzen 5 in Gebrauchsstellung vom Trennboden 2 zu der oberen freien Öffnung 6 des Pflanzgefäßes 1 hin führt. Der Füllstutzen 5 ist mit dem Trennboden 2 über ein Scharnier 7 verbunden. Mittels dieses Scharniers 7 kann der Füllstutzen 5 aus der Gebrauchsstellung (Fig. 1) in die Transportstellung (Fig. 2) verschwenkt werden und umgekehrt.

Über das Scharnier 7 ist der Füllstutzen 5 randnah am Trennboden angelenkt, wobei er in Transportstellung sich bis zu dem gegenüberliegenden Topfrand erstrecken kann, wodurch eine erhebliche Länge des Füllstutzens 5 ermöglicht ist. In Transportstellung ist der Füllstutzen 5 in einer Eintiefung 8 des Trennbodens 2 aufgenommen, so daß er im wesentlichen in den Trennboden 2 eingebettet ist und nur wenig über diesen hinausragt.

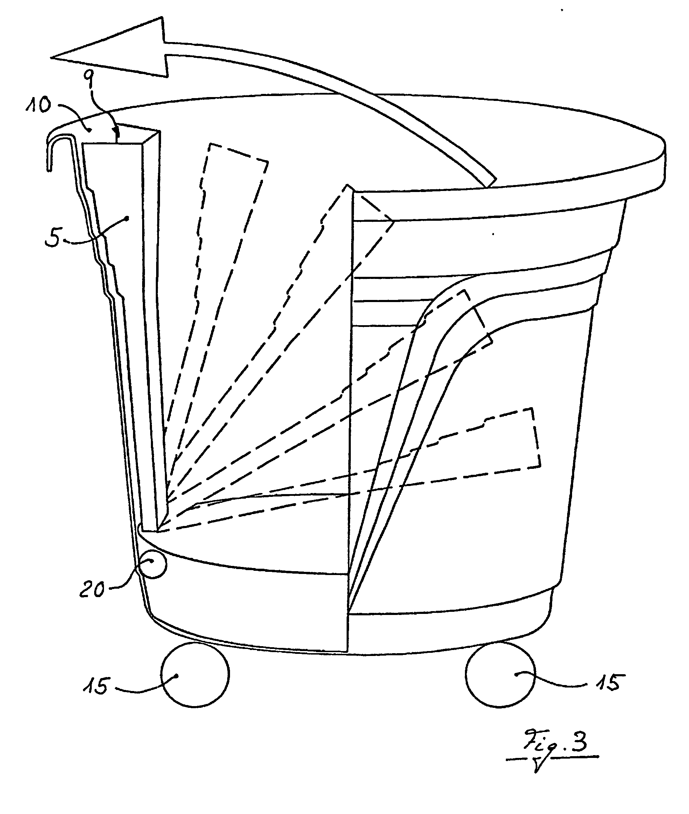

Der Füllstutzen 5 ist als offenes Rinnenprofil im Ausführungsbeispiel ausgebildet (siehe insbesondere Fig. 3), so daß der Einlaufkanal 9 für die Befüllung des Speichers 3 durch die Gefäßwand 10 einerseits und den Füllstutzen 5 andererseits seitlich begrenzt ist. Es ist natürlich auch möglich, als Füllstutzen 5 geschlossene Rohr- oder Kastenprofile zu verwenden. Die hier gezeigte Ausführung weist demgegenüber jedoch den Vorteil auf, daß sie spritztechnisch einfach und sehr preisgünstig herzustellen und beim Stapeln nach oben hin offen ist. Eine vollständige Abdichtung des Füllstutzens 5 gegenüber der Behälterwand 10 ist dabei nicht nötig, da ein teilweiser Austritt von Wasser in den Pflanzgrund während der Bewässerung unschädlich ist. Dieser Vorteil des Rinnenprofils tritt insbesondere dann zutage, wenn der Füllstutzen 5 aus Kunststoff hergestellt ist. Dabei kann der Füllstutzen 5 einstückig mit dem Trennboden 2 ausgebildet und mit diesem über ein Filmscharnier 7 verbunden sein, oder es kann der Füllstutzen 5 mit einem Verankerungsfuß 11 einstückig ausgebildet sein, wobei der Verankerungsfuß 11 mit dem Trennboden 2 beispielsweise durch Einklicken von Rastmitteln in entsprechende Aussparungen verbunden ist und sich zwischen dem Verankerungsfuß 11 und dem Einfüllstutzen 5 das beispielsweise Filmscharnier 7 befindet.

Der Trennboden 2 ist ebenfalls besonders kostengünstig aus einem Kunststoffteil herzustellen, das vorzugsweise als einstückiges Spritzgußteil ausgebildet ist. Dieser Trennboden 2 weist napfförmige Vertiefungen 12,12a,13 auf, wobei die Vertiefungen 12,12a als Standfüße ausgebildet sind, mittels denen der Trennboden 2 auf dem Boden des Pflanzgefäßes 1 aufsteht. Die Füße 12,12a weisen Steiglöcher 14 auf, durch die hindurch das im Speicher 3 gelagerte Wasser aufsteigen kann, so daß der Trennboden 2 eine Benetzung des Pflanzgrundes ermöglicht.

Die Vertiefungen 13 im Trennboden 2 dienen zur Aufnahme von Füßen und/oder Rollen 15 von Pflanzgefäßen 1, wobei bei Aufeinanderstapelung der Pflanzgefäße 1 die Rollen 15 bzw. Standfüße der Pflanzgefäße 1 in die Vertiefungen 13 eingreifen und somit ein dicht gepacktes Übereinanderstapeln der Pflanzgefäße 1 ermöglicht ist. In dieser gestapelten Stellung befindet sich dann der flach abgesenkte Füllstutzen 5 zwischen den Füßen bzw. Rollen 15, so daß die Dichte des Ineinanderstapelns durch den Füllstutzen 5 nicht behindert ist.

In einer Außenwandung 10 des Pflanzgefäßes 1 befindet sich seitlich zum Speicher 2 ein transparentes Sichtfenster 16, das aus einem Eingießelement aus transparentem Kunststoff gebildet ist und ein randseitiges Verzahnungsprofil 17 aufweist. Dieses randseitige Verzahnungsprofil 17 ist umlaufend um das Sichtfenster ausgebildet und sichert ein dichtes Eingießen des Sichtfensters 16 in die Außenwandung 10.

In dem Sichtfenster 16 befindet sich ein Verschwächungsbereich 18, der herausgedrückt werden kann und dann eine Überlauföffnung des Speichers 3 ausbildet. Diese Überlauföffnung befindet sich im oberen Bereich des Speichers 3, im wesentlichen auf der Höhe des Trennbodens 2.

Oberhalb des Verschwächungsbereiches 18, der gegebenenfalls zu einer Überlauföffnung geworden ist, befindet sich eine Abweiserfläche 19, die unterhalb des Füllstutzens 5 angeordnet ist und sich im Einlaufkanal 9 für das Wasser befindet. Durch diese Abweiserfläche 19 wird das einlaufende Wasser 9 zunächst an der Überlauföffnung 18 vorbei geleitet, so daß während des Einfüllvorgangs kein Wasser direkt aus der Überlauföffnung 18 heraustreten kann, bevor die maximale Füllhöhe des Speichers 3 erreicht ist. Dann wird die Überlauföffnung 18 für das aufsteigende Wasser wirksam, jedoch nicht für das durch den Kanal 9 einlaufende. Auf diese Weise ist sichergestellt, daß ein Befüllen des Pflanzgefäßes 1 auch bei vorhandener Überlauföffnung 18 ohne Austritt von Wasser möglich ist, wenn während des Einfüllens die Füllstandshöhe kontrolliert wird.

Zur Anzeige der Füllstandshöhe des Wassers im Speicher 3 dient eine Schwimmkugel 20, die im wesentlichen durch vertikale Führungen 21 des Sichtfensters bzw. durch eine ausgenommene Führung 22 im Fuß 12a des Trennbodens 2 geführt ist. Nach Entfernen des Trennbodens 2 ist daher die Schwimmkugel 20 frei beweglich und kann herausgenommen werden.

Es ist natürlich auch möglich, die Schwimmkugel 20 in einem geschlossenen vertikalen Kanal zu führen, um dadurch die Füllhöhe zu messen. Die hier gezeigte Lösung stellt jedoch die produktionstechnisch einfachste dar, da ein zusätzlicher Kanal für die Schwimmkugel 20 nicht ausgebildet werden muß, sondern bei Herstelung des Trennbodens 2 automatisch mit ausgebildet wird.

Es versteht sich, daß ein erfindungsgemäßes Pflanzgefäß verschiedenste Formen und Größen aufweisen kann, wobei eine Stapelbarkeit der Pflanzgefäße Voraussetzung für den sinnvollen Einsatz der Erfindung ist. Dazu sind die Pflanzgefäße nach oben hin erweiternd ausgebildet, wobei sich diese Erweiterung entweder kontinuierlich oder in Stufen vollziehen kann. Eine runde Grundform des Pflanzgefäßes ist nicht erforderlich, sondern es kommen auch quadratische oder rechteckige oder andere Formen in Frage.

## Patentansprüche

1. Pflanzgefäß (1) in oberseitig offener und sich nach oben hin aufweitender Grundform mit einem unten liegenden Speicher (3) für Wasser, der nach oben hin durch einen zumindest bereichsweise wasserdurchlässigen Trennboden (2) begrenzt ist und mit einem Füllstutzen (5) versehen ist, der in Gebrauchsstellung vom Trennboden (2) zu einer oben freien Öffnung (6) des Pflanzgefäßes (1) hinführt und in einer Stapelstellung flach an den Trennboden (2) anlegbar ist, wobei Trennboden (2) und Füllstutzen (5) über ein Scharnier (7) miteinander verbunden sind, **dadurch gekennzeichnet, daß** Füllstutzen (5) in der Stapelstellung oberseitig auf dem Trennboden (2) aufliegt, wobei er eine Ausbildung in Form eines Rinnenprofils aufweist, das in der Gebrauchsstellung mit einer Innenwand (10) des Pflanzgefäßes (1) abschließt.

2. Pflanzgefäß nach Anspruch 1, **dadurch gekennzeichnet, daß** der Trennboden eine Eintiefung (8) zur Aufnahme des Füllstutzens (5) in der Stapelstellung aufweist.

3. Pflanzgefäß nach Anspruch 1 oder 2, **dadurch gekennzeichnet, daß** der Füllstutzen (5) randnah an dem Trennboden (2) angelenkt ist.

4. Pflanzgefäß nach einem der Ansprüche 1 bis 3, **dadurch gekennzeichnet. daß** der Füllstutzen (5) mitsamt einem Verankerungsfuß (11) einstückig aus Kunststoff gebildet ist und oberhalb des Verankerungsfußes (11) ein Filmscharnier (7) aufweist.

5. Pflanzgefäß nach einem der Ansprüche 1 bis 4, **dadurch gekennzeichnet. daß** der Trennboden (2) aus einem Kunststoffteil besteht, welches auf napfförmigen Füßen (12,12a) aufsteht und zumindest teilweise Steiglöcher (14) in den Füßen (12,12a) aufweist

6. Pflanzgefäß nach Anspruch 5, **dadurch gekennzeichnet, daß** der Trennboden (2) napfförmige Vertiefungen (13) zur Aufnahme von Füßen und/oder Rollen (15) aufzustapelnder Gefäße (1) aufweist.

7. Pflanzgefäß nach einem der Ansprüche 1 bis 6, **dadurch gekennzeichnet daß** es in einer Außenwandung (10) seitlich zum Speicher (3) ein transparentes Sichtfenster (16) aufweist.

8. Pflanzgefäß nach Anspruch 7, **dadurch gekennzeichnet, daß** das Sichtfenster (16) aus einem Eingießelement besteht, welches mit dem Pflanzgefäß über ein randseitiges Verzahnungsprofil (17) zu einem einstückigen Spritzgußteil verbunden ist

9. Pflanzgefäß nach Anspruch 7 und 8. **dadurch gekennzeichnet, daß** das Sichtfenster (16) einen zu einer Überlauföffnung herausdrückbaren Verschwächungsbereich (18) aufweist.

10. Pflanzgefäß nach Anspruch 9, **dadurch gekennzeichnet, daß** das Sichtfenster unterhalb des Füllstutzens (5) angeordnet ist und daß oberhalb der Überlauföffnung (18) eine Abweiserfläche (19) vorgesehen ist.

11. Pflanzgefäß nach einem der Ansprüche 7 bis 10, **dadurch gekennzeichnet. daß** innenseitig hinter dem Sichtfenster (16) eine im wesentlich vertikal ausgerichtete Bewegungsbahn für eine Schwimmkugel (20) ausgebildet ist.

## Claims

1. Plant container (1) having a fundamental shape which is open at the top and wider at the top than the bottom with an underlying storage reservoir (3) for water, the upper part of which is defined by a separating element (2) which over at least part of its area is water-permeable and possesses a filler-tube (5) which when the container is in use, leads from the separating element (2) to an upper free opening (6) in the plant container (1) and when the container is stored in stack form, can be laid flat on the separating element (2), such that the separating element (2) and the filler tube (5) being connected together by a hinge (7), **characterised in that** when the container is stacked the filler tube (5) lies upon the upper side of the separating element (2) and that the filler tube has the form of a gutter, which lies against an internal wall of the plant container (1) when the latter is in use.

2. Plant container in accordance with claim 1, **characterised in that** the separating element contains a depression (8) to receive the filler tube (5) when the container is stacked.

3. Plant container in accordance with claim 1 or 2, **characterised in that** the filler tube (5) is hinged close to the edge of the separating element (2).

4. Plant container in accordance with one of the claims 1 to 3, **characterised in that** the filler tube (5) together with an anchor foot (11) is formed as a single unit made of plastic material and exhibits a hinge (7) made of plastic above the anchor foot. (11).

5. Plant container in accordance with one of the claims 1 to 4, **characterised in that** the separating element (2) is made of plastic which stands upon cup-like feet (12, 12a) and exhibits, at least partially, holes (14) in the feet (12, 12a) providing upward access for water.

6. Plant container in accordance with claim 5, **characterised in that** the separating element (2) has cup-like depressions (13) for the acceptance of feet and / or rollers (15) when the containers (1) are stacked

7. Plant container in accordance with on of the claims 1 to 6, **characterised in that** a transparent inspection window (16) is provided in an outer wall of the reservoir (3).

8. Plant container in accordance with claim 7, **characterised in that** the inspection window (16) consists of a pouring element which is connected to the plant container by means of an edge-located toothed-profile (17) to form a single injection-moulded unit.

9. Plant container in accordance with claim 7 and 8, **characterised in that** the inspection window (16) is provided with an area of weakness which can be pushed out to form an overflow opening.

10. Plant container in accordance with claim 9, **characterised in that** the inspection window is located below the filler tube (5) and that a deflecting surface (19) is provided above the overflow opening (18).

11. Plant container in accordance with one of the claims 7 to 9, **characterised in that** internally behind the inspection window (16) there is an essentially vertical movement path for a float indicator (20).

## Revendications

1. Bac à plantes (1) ayant une forme générale ouverte en haut et qui s'élargit vers le haut, comprenant un réservoir (3) pour de l'eau, placé en position basse et limité vers le haut par un fond séparateur (2) perméable à l'eau au moins par zones, et qui est muni d'une tubulure de remplissage (5) qui, dans la position d'utilisation, mène du fond séparateur (2) à une ouverture supérieure libre (6) du bac à plantes (1) et qui, dans une position d'empilement, peut être posé à plat sur le fond séparateur (2), le fond séparateur (2) et la tubulure de remplissage (5) étant reliés l'un à l'autre par une charnière (7),
**caractérisé en ce que**
la tubulure de remplissage (5) s'appuie sur le fond séparateur (2) au droit de son bord supérieur dans la position d'empilement, et elle présente une configuration de la forme d'un profil à gorges qui, dans la position d'utilisation, épouse une paroi intérieure (10) du bac à plantes (1).

2. Bac à plantes selon la revendication 1,
**caractérisé en ce que**
le fond séparateur (2) présente un approfondissement (8) destiné à recevoir la tubulure de remplissage (5) dans la position d'empilement.

3. Bac à plantes selon la revendication 1 ou 2,
**caractérisé en ce que**
la tubulure de remplissage (5) est articulée au fond séparateur (2) à proximité du bord.

4. Bac à plantes selon une des revendications 1 à 3,
**caractérisé en ce que**
la tubulure de remplissage (5) est formée en matière plastique en une seule pièce avec un pied d'ancrage (11) et présente une charnière film (7) au-dessus du pied d'ancrage (11).

5. Bac à plantes selon une des revendications 1 à 4,
**caractérisé en ce que**
le fond séparateur (2) est constitué par une pièce en matière plastique qui se tient sur des pieds (12, 12a) en forme de godets et présente au moins partiellement des trous d'ascension (14) dans les pieds (12, 12a).

6. Bac à plantes selon la revendication 5,
**caractérisé en ce que**
le fond séparateur (2) présente des approfondissements (13) en forme de godets destinés à recevoir des pieds et/ou roulettes (15) de bacs (1) à empiler.

7. Bac à plantes selon une des revendications 1 à 6,
**caractérisé en ce qu'**
il présente une fenêtre de regard transparente (16) dans une paroi extérieure (10) latéralement au réservoir (3).

8. Bac à plantes selon la revendication 7,
**caractérisé en ce que**
la fenêtre de regard (16) est constituée par un élément moulé qui est relié en une seule pièce au bac à plantes par l'intermédiaire d'un profil de denture marginal (17).

9. Bac à plantes selon la revendication 7 ou 8,
**caractérisé en ce que**
la fenêtre de regard (16) présente une zone d'affaiblissement (18) que l'on peut défoncer pour former une ouverture de trop-plein.

10. Bac à plantes selon la revendication 9,
**caractérisé en ce que**
la fenêtre de regard (16) est disposée au-dessous de la tubulure de remplissage (5), et une surface déflectrice (19) est prévue au-dessus de l'ouverture de trop-plein (18).

11. Bac à plantes selon une des revendications 7 à 10,
**caractérisé en ce que**
sur le côté intérieur, en arrière de la fenêtre de regard (16), est formée une voie de déplacement orientée sensiblement verticalement, pour une boule formant flotteur (20).
